# DEMANDE DE BREVET EUROPEEN

(11) **EP 2 063 137 A2**
(43) Date de publication de la demande: **27.05.2009**
(21) Numéro de dépôt: 08305768.7
(22) Date de dépôt: 04.11.2008
(51) Int. Cl.: F16B 45/00

(54) **Crochet pour câble et notamment câble élastique, et câble muni d'un tel crochet**

(30) Priorité: 08.11.2007 FR 0758872
(71) Demandeur: Joubert Productions, 63600 Ambert (FR)
(72) Inventeur: Joubert, Xavier, 63600 Ambert (FR); Joubert, Thierry, 63600 Ambert (FR)
(74) Mandataire: Vuillermoz, Bruno

(57) **Abrégé**

Ce crochet de fixation est destiné à être monté à l'extrémité (5) d'un câble (4), notamment d'un câble élastique.

Il comporte un insert (1), définissant un alésage (3) au sein duquel est introduite ladite extrémité (5) du câble (4), ladite extrémité étant traversée par une goupille (6) au dessus de l'orifice (3) de l'insert ainsi défini, l'ensemble ainsi constitué étant surmoulé dans une matière synthétique et notamment en matière plastique.

## Description

### DOMAINE TECHNIQUE

L'invention concerne un crochet destiné à être monté sur l'extrémité d'un câble ou d'une sangle, et plus particulièrement l'extrémité d'un câble élastique du type « sandow ». Elle concerne également un câble ou sangle muni d'au moins un tel crochet à l'une de ses extrémités.

Les sandows ou câbles élastiques sont bien connus en soi et sont mis en oeuvre dans un grand nombre d'applications, tel que par exemple les filets de retenue de bagages, la sécurisation de bagages sur une galerie, sur un chariot, etc.... Afin d'assurer leur fixation réversible sur une telle galerie ou un tel chariot, il est connu de leur adjoindre un crochet.

### ETAT ANTERIEUR DE LA TECHNIQUE

De tels crochets sont connus depuis bien longtemps et sont traditionnellement constitués d'une partie monobloc, éventuellement réalisée en matière plastique, et pourvue d'un orifice ou alésage, généralement traversant, destiné à permettre le passage et surtout la solidarisation à ce niveau du câble élastique.

L'une des difficultés rencontrées pour ce type de crochet réside justement dans cette solidarisation, qui doit tout à la fois être simple à mettre en oeuvre, peu encombrante et en outre, satisfaisante en termes de résistance mécanique, afin de pouvoir s'opposer aux efforts de traction effectués sur le câble élastique.

On a par exemple décrit dans le document FR-2 407 386, un crochet comportant une extrémité recourbée en forme de boucle ouverte, afin de permettre la fixation amovible du crochet sur un lieu d'accroche, l'autre extrémité du crochet constituant une boucle fermée au sein de laquelle le câble lui-même forme boucle, cette boucle étant assurée par un lien. On conçoit que ce système, déjà ancien, soit relativement long à mettre en oeuvre et présente une fiabilité limitée de par le lien assurant la fixation de la boucle du câble sur la boucle du crochet.

On a également proposé, par exemple dans le document FR-2 767 162, un crochet du type en question dans lequel le câble est reçu dans un passage présentant un rétrécissement propre à définir une butée destinée à arrêter l'extrémité du câble, ce dernier ayant été élargi à cet effet. Cet élargissement du câble résulte notamment du repliage sur elle-même de l'extrémité dudit câble, ce repliage étant maintenu ou conservé par sertissage réalisé au moyen d'un clip métallique, tel qu'un anneau d'acier écrasé après sertissage. Là encore, on conçoit que si certes la résistance mécanique offerte par ce mode d'assemblage est susceptible de satisfaire aux critères précédemment décrits de résistance à la traction, de sorte qu'une traction nominale ne risque pas d'extraire le câble hors du crochet, en revanche, la réalisation de l'extrémité élargie du câble nécessite une opération fastidieuse, relativement longue à mettre en oeuvre, et donc consommatrice de temps et partant génératrice de surcoût.

Enfin, on a proposé dans le document FR-2 881 488, un crochet du type en question dans lequel la fixation du câble sur le crochet est réalisée au moyen d'une agrafe munie de deux branches destinées à venir coopérer avec le câble au niveau de l'alésage dont le crochet est pourvu. Si ce mode de fixation est également susceptible de satisfaire à la résistance à la traction nominale, en revanche, il présuppose la réalisation d'orifices traversants au sein du crochet proprement dit, générant de fait une étape supplémentaire pour la réalisation du câble en question.

### DESCRIPTION SUCCINTE DE L'INVENTION

L'invention propose un crochet du type en question, à la fois simple à mettre en oeuvre, de fabrication aisée, présentant la résistance mécanique suffisante, et dont la fabrication ne génère pas une durée trop importante susceptible d'affecter le coût de revient d'un tel crochet.

Ce crochet de fixation, destiné à être monté à l'extrémité d'un câble, notamment d'un câble élastique, comporte un insert définissant un alésage au sein duquel est introduite ladite extrémité du câble. Celle-ci est traversée par une goupille au dessus de l'orifice de l'insert ainsi défini, et l'ensemble ainsi constitué est surmoulé dans une matière synthétique et notamment en matière plastique, typiquement du polypropylène, du polyoxyméthylène ou polyacétal (POM) ou du polyamide.

En d'autres termes, l'invention consiste à solidariser l'extrémité du câble sur un insert par une simple goupille, puis à surmouler l'ensemble dans un matériau synthétique, l'ensemble devenant ainsi complètement noyé dans la matière synthétique de surmoulage, conférant en outre la forme définitive au crochet.

Selon une caractéristique avantageuse de l'invention, cet insert est métallique.

Selon une autre caractéristique de l'invention, l'insert est de forme recourbée de telle sorte à ce que lors du surmoulage, il corresponde sensiblement à la forme du crochet, à l'exception toutefois de sa base plus épaisse.

L'invention concerne également un câble élastique ou non, dont l'une au moins des extrémités comporte un crochet tel que précédemment décrit.

### BREVE DESCRIPTION DES FIGURES

La manière dont l'invention peut être réalisée et les avantages qui en découlent ressortiront mieux de l'exemple de réalisation qui suit, donné à titre indicatif et non limitatif, à l'appui des figures annexées.

La figure 1 est une représentation schématique en perspective du crochet obtenu selon l'invention.
La figure 2 est une vue analogue dudit crochet en semi transparence, propre à illustrer tous ses constituants.
La figure 3 est une représentation schématique illustrant l'extrémité du câble solidarisé à l'insert conforme à l'invention, préalablement à l'étape de surmoulage.

### DESCRIPTION DETAILLEE DE L'INVENTION

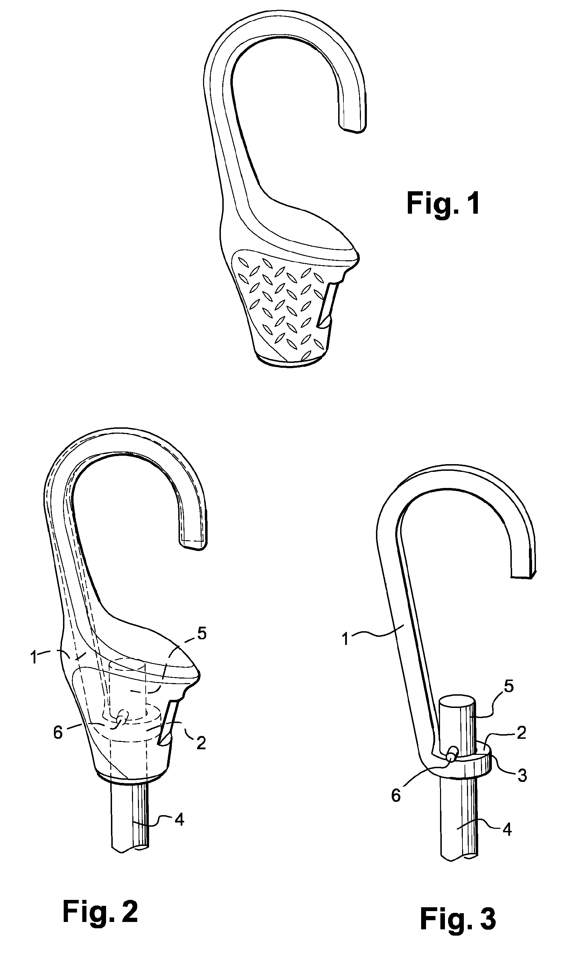

On a représenté en relation avec la figure 1 le crochet tel qu'obtenu conformément à l'invention. Le crochet ainsi visualisé se présente sous la forme définitive, c'est-à-dire après l'étape de surmoulage telle que décrite plus en détail ultérieurement.

Selon l'invention, le crochet comporte tout d'abord un insert **1**, typiquement métallique, adoptant la forme générale dudit crochet et notamment une forme recourbée d'un type classique.

La base **2** de l'insert s'étend selon un plan sensiblement perpendiculaire par rapport au reste du crochet. Cette zone **2**, sensiblement circulaire, définit un alésage **3**, destiné à recevoir l'extrémité **5** d'un câble **4**, notamment d'un câble élastique.

Ladite extrémité **5** est sécurisée à ce niveau par insertion d'une goupille **6**, par exemple métallique, débouchant de part en part de ladite extrémité **5** afin de venir reposer après insertion sur la surface supérieure de la zone annulaire **3** de la base **2** de l'insert **1**.

On conçoit de fait qu'il n'y a pas lieu de procéder à un élargissement quelconque de l'extrémité 5 du câble élastique pour permettre son positionnement et sa rétention à ce niveau.

L'ensemble ainsi constitué, c'est-à-dire insert **1** + extrémité du câble **5** et goupille **6**, subit alors une étape de surmoulage dans un moule approprié, de telle sorte à conférer au crochet sa forme définitive. Ce surmoulage est réalisé en matière plastique et notamment en polypropylène, en polyoxyméthylène ou polyacétal (POM) ou en polyamide.

On observe ainsi, par exemple sur la figure 1, que l'extrémité **5** du câble élastique n'est plus apparente, pas plus d'ailleurs que la goupille **6**. On sécurise, ce faisant, par l'étape de surmoulage la solidarisation du câble sur le crochet, et donc notamment sur l'insert, puisque en raison de ce moulage, il n'y pas de risque de voir la goupille s'escamoter de manière intempestive hors de l'extrémité **5** du câble élastique **4**.

On conçoit tout l'intérêt du crochet conforme à l'invention en raison tout d'abord de sa simplicité d'assemblage, et ensuite en raison de la sécurisation accrue du mode de solidarisation, permettant de s'affranchir de tout risque d'escamotage intempestif de l'extrémité du câble hors du crochet.

## Revendications

1. Câble élastique ou non (4), muni au moins à l'une de ses extrémités (5) d'un crochet de fixation, ***caractérisé* en ce que** le crochet comporte un insert (1), définissant un alésage (3) au sein duquel est introduite ladite extrémité (5) du câble (4), ladite extrémité étant traversée par une goupille (6) au dessus de l'orifice (3) de l'insert ainsi défini, l'ensemble ainsi constitué étant surmoulé dans une matière synthétique et notamment en matière plastique.

2. Câble selon la revendication 1, ***caractérisé* en ce que** l'insert (1) adopte la forme générale du crochet, et est notamment pourvu d'une boucle ouverte.

3. Câble selon l'une des revendications 1 et 2, ***caractérisé* en ce que** l'orifice (3) de l'insert (1) est réalisé au niveau de sa base (2), orientée sensiblement perpendiculairement par rapport au reste de l'insert (1).

4. Câble selon l'une des revendications 1 à 3, ***caractérisé* en ce que** l'insert (1) est métallique.

5. Câble selon l'une des revendications 1 à 4, ***caractérisé* en ce que** le matériau de surmoulage est choisi dans le groupe comprenant le polypropylène, le polyoxyméthylène ou polyacétal (POM) et le polyamide.
